# EUROPÄISCHE PATENTANMELDUNG

(11) **EP 3 047 759 A1**
(43) Veröffentlichungstag der Anmeldung: **27.07.2016**
(21) Anmeldenummer: 16152232.1
(22) Anmeldetag: 21.01.2016
(51) Int. Cl.: A47C 23/00

(54) **FEDERKÖRPER FÜR SITZ- ODER LIEGEMÖBEL**

(30) Priorität: 26.01.2015 DE 102015101054
(71) Anmelder: Wii-Lax GmbH, 99834 Gerstungen (DE)
(72) Erfinder: Huhn, Heino, 99837 Dankmarshausen (DE)
(74) Vertreter: Weidner Stern Jeschke

(57) **Zusammenfassung**

Die Erfindung betrifft einen Federkörper für die Auflage der Polsterung von Sitz- oder Liegemöbeln, insbesondere der federnden Auflage von Matratzen in Bettgestellen. Der Federkörper weist einen druckelastischen Grundkörper mit mindestens drei von einer unteren Grundplatte (2) abragenden, c-förmig gebogenen, flachen Federarmen (4) auf, welche oben zusammengeführt an einer Auflagetellerplatte (3) enden. In den Federarmen sind vertikal mittig Spannöffnungen (9) ausgebildet, in welche die Spannstränge (6) eines einstückigen Spannelements (5) mit unterschiedlich einstellbarer Spannwirkung einhängbar sind.

## Beschreibung

Die Erfindung betrifft einen Federkörper für die Auflage der Polsterung von Sitz- oder Liegemöbeln, insbesondere der federnden Auflage von Matratzen in Bettgestellen.

Es ist üblich, Bettmatratzen auf Lattenrosten mit quer zur Bettlängsrichtung verlaufenden Latten zu lagern, wobei die einzelnen Latten als Federlatten ausgebildet sind. Um den Liegekomfort zu erhöhen, kann dabei die Federwirkung einzelner Federlatten verändert werden, wodurch die Federeigenschaften im Bereich bestimmter Körperpartien individuell einstellbar ist. Die Einstellbarkeit der Federeigenschaften über die gesamte Länge einer Federlatte genügt jedoch oft den individuellen Bedürfnissen nicht.

Dazu ist es bekannt, auf den quer verlaufenden Latten eines Lattenrostes beabstandet einzelne Federelemente anzuordnen, die der jeweiligen Körperpartie angepasste Federeigenschaften aufweisen. So ist es üblich, an einem auf einer vorzugsweise nicht federnden Latte befestigbaren Basisteil nach oben ragende Federarme anzuordnen, an deren oberen Enden sich Auflageteller für die Matratze befinden. Eine solche gattungsgemäße Lösung ist Gegenstand der DE 297 21 656 U1.

In der EP 1 211 969 B1 wird ein Federkörper für eine Einzelsegmentunterfederung beschrieben, der von einem oberen Zentrum radial abragende Federarme aufweist, welche korbartig gebogen in einer Grundplatte formschlüssig verrastbar sind. Die Grundplatte ist zum Befestigen auf einer Federlatte oder einer anderen Fläche ausgebildet. Auf dem oberen Zentrum befindet sich ein Auflageteller für die Matratze. Um benachbarte Federelemente untereinander zu vernetzen, können an den oberen Zentren radial abragende Verbindungsarme angeordnet sein, welche an ihren Enden mit benachbarten Federelementen verbindbar sind.

Unter der Internetadresse https://www.relax-bettsysteme.at/de/schlafsysteme/relax-2000, recherchiert am 23.01.2015, ist ein einstückiger, auf Druck belastbarer Federkörper zum Befestigen auf der Lattung eines Bettrostes beschrieben, bei welchem von einer unteren Grundplatte zwei diametral gegenüber angeordnete, c-förmig gebogene, flache Federarme abragen und oben rückgeführt an einer Auflagetellerplatte enden. In Bettquerrichtung abgebildet weist dieser Federkörper somit einen im Wesentlichen ovalen Querschnitt auf. Vertikal mittig sind mittels in den Federarmen ausgebildeter Öffnungen elastische Spannbänder in zwei Spanngraden einhängbar. Durch eine unterschiedliche Anordnung der Spannbänder sollen bis zu fünf Festigkeitsgrade einstellbar sein. Bei einer nicht vertikal mittig auf den Auflageteller einwirkenden Auflagekraft, kommt es zwar zu einem federnden Kippen des Auflagetellers, ein definiertes Wirken der eingestellten Spannbänder hinsichtlich einer angestrebten optimalen Kräfteverteilung zwischen den Federarmen ist jedoch dabei nicht mehr zufriedenstellend gewährleistet.

Die bekannten technischen Lösungen sind in ihrem konstruktiven Aufbau zu aufwendig oder hinsichtlich ihrer Justierbarkeit nicht zufriedenstellend.

Es ist daher Aufgabe der Erfindung, einen gattungsgemäßen Federkörper zu schaffen, mit dem ein besseres Einstellen der Kräfteverteilung im Federelement möglich ist.

Diese Aufgabe wird durch ein Federelement mit den Merkmalen des Patentanspruchs 1 gelöst. Vorteilhafte Ausgestaltungen des erfindungsgemäßen Federelements sind in den Unteransprüchen angegeben,

Ein wesentlicher Vorteil der Anordnung von mehr als zwei Federarmen in Verbindung mit einer entsprechend mehrsträngigen Ausbildung des Spannelements besteht darin, dass auch bei in Längsrichtung außermittig auf den Auflageteller wirkenden Auflagekräften eine optimale Kräfteverteilung im Federkörper einstellbar ist. Dadurch können zum Beispiel das Federverhalten und die Einsinktiefe einer Bettmatratze besser an die konkreten Belastungsbedingungen sowie die individuellen ergonomischen Bedürfnisse des Nutzers angepasst werden. Das erfindungsgemäße Federelement besteht dazu vorteilhaft aus Kunststoff. Der noch besseren Anpassbarkeit einzelner Federelemente dient auch die Ausgestaltung der Spannelemente in unterschiedlichen Elastizitätsgraden.

Ein Ausführungsbeispiel der Erfindung ist in den Figuren dargestellt und wird im Folgenden näher erläutert.

Es zeigen:
- Fig. 1: ein Federelement mit Spannelement
- Fig. 2: ein Federelement ohne Spannelement
- Fig. 3: ein Spannelement
- Fig. 4: die Perspektive eines bestückten Lattenrostes

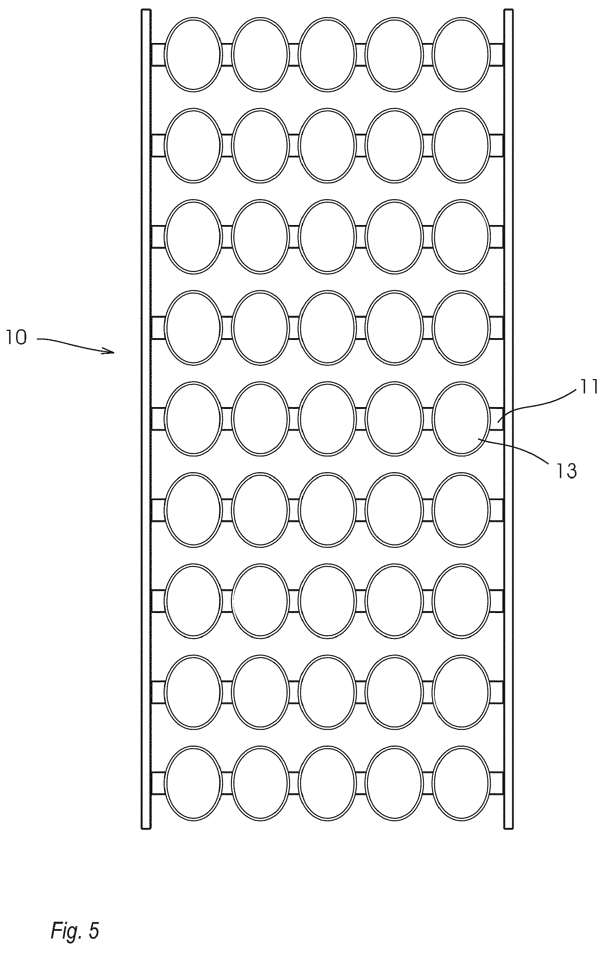

- Fig. 5: die Draufsicht eines bestückten Lattenrostes
- Fig. 6: die Seitenansicht auf die Schmalseite eines bestückten Lattenrostes
- Fig. 7: die Seitenansicht auf die Längsseite eines bestückten Lattenrostes

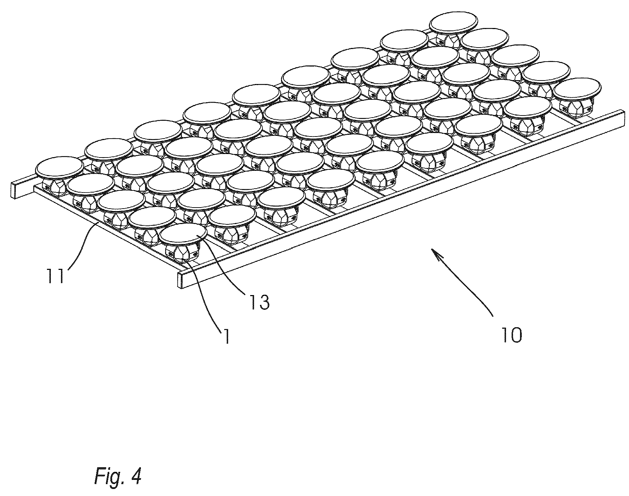

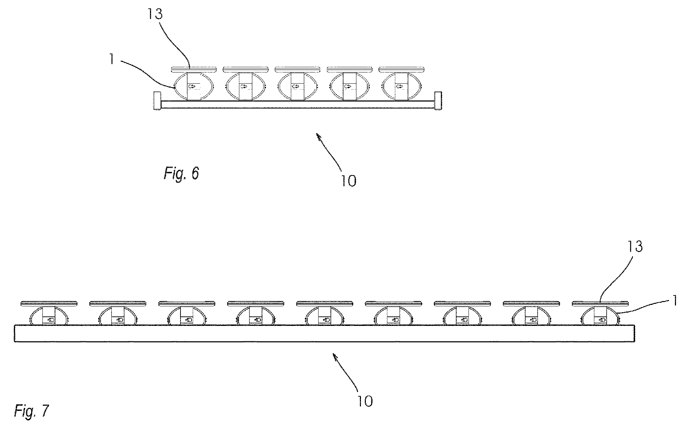

Im Ausführungsbeispiel handelt es sich um ein Federelement 1, welches aus Kunststoff besteht, und bei welchem vier Federarme 4 so zwischen der Grundplatte 2 und der Auflagetellerplatte 3 ausgebildet sind, dass sich jeweils zwei Federarme 4 parallel und diametral gegenüberstehen. An der Grundplatte 2 sind zwei Befestigungsbolzen 8 zum verdrehsicheren Befestigen des Federelements 1 auf einer Latte 11 eines Lattenrostes 10 ausgebildet. Analog weist die Auflagetellerplatte 3 zwei Befestigungsbolzen 8 zum Befestigen eines Auflagetellers 13 auf (Fig. 4, 6 und 7). Horizontal und vertikal mittig weisen die Federarme 4 Spannöffnungen zum Einhängen der Spannstränge 6 des Spannelements 5 auf.

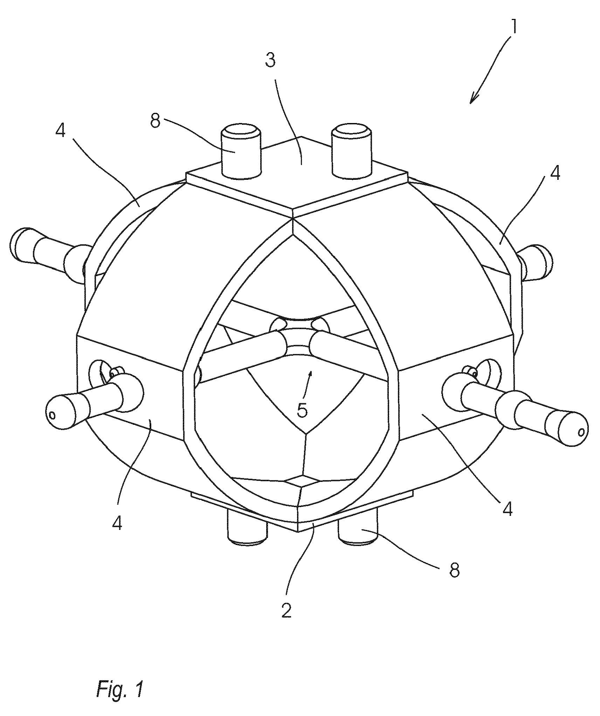

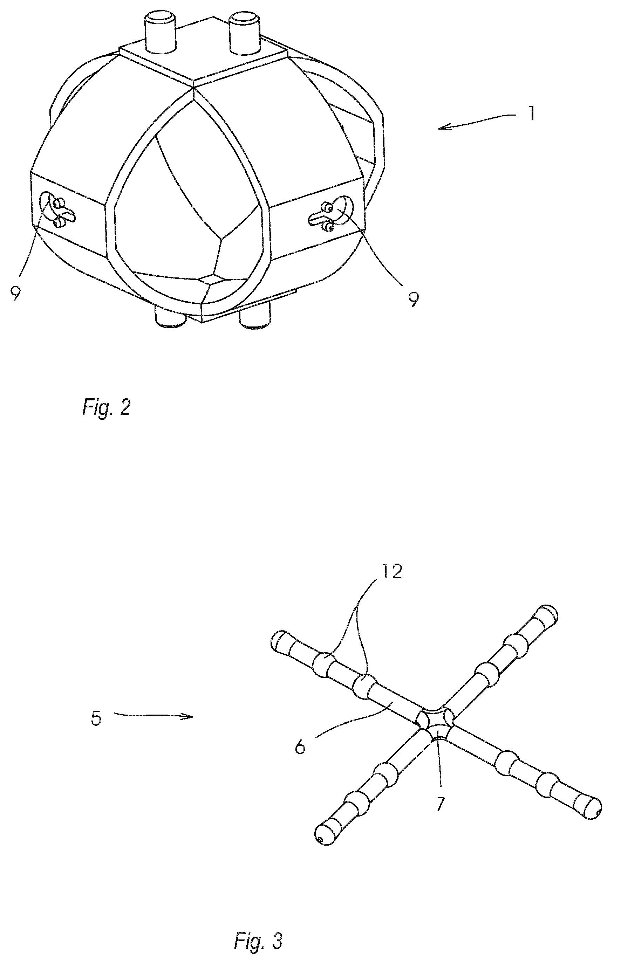

Das eingehängte Spannelement 5 (Fig. 3) ist einstückig und kreuzförmig ausgebildet. Die von dem Mittelknoten 7 abragenden Spannstränge 6 weisen jeweils zwei Einhängeverdickungen 12 auf. Durch eine entsprechende Wahl der Einhängeverdickungen 12 sind zwischen den Federarmen 4 auch asymmetrisch wirkende Kräfteverteilungen realisierbar (Fig. 1).

In den Fig. 4, 6 und 7 sind die Federelemente 1 ohne eingehängte Spannelemente 5 dargestellt.

Bei einer nicht dargestellten weiteren vorteilhaften Ausführungsform der Erfindung, sind drei Federarme jeweils in einem Winkel von 120° angeordnet. Das ebenfalls nicht dargestellte Spannelement weist dabei entsprechend drei von einem Mittelknoten ausgehende Spannelemente auf.

### Bezugszeichenliste

- 1: Federelement
- 2: Grundplatte
- 3: Auflagetellerplatte
- 4: Federarm
- 5: Spannelement
- 6: Spannstrang
- 7: Mittelknoten
- 8: Befestigungsbolzen
- 9: Spannöffnung
- 10: Lattenrost
- 11: Latte
- 12: Einhängeverdickung
- 13: Auflageteller

## Patentansprüche

1. Federkörper für Sitz- oder Liegemöbel, zum Anordnen auf einer Unterlage für die Auflage einer Matratze oder Polsterung, wobei der Grundkörper des Federkörpers druckelastisch ausgebildet ist, und bei welchem von einer unteren Grundplatte c-förmig gebogene, flache Federarme abragen und oben zusammengeführt an einer Auflagetellerplatte enden, und dass an den Federarmen vertikal mittig, mittels dort ausgebildeter Spannöffnungen, die Federarme auf Zug belastend verbindend, elastische Spannelemente einhängbar sind, **dadurch gekennzeichnet, dass** zwischen der Grundplatte (2) und der Auflagetellerplatte (3) mehr als zwei c-förmig gebogene Federarme (4) gleichmäßig um eine Mittelsenkrechte verteilt angeordnet sind und dass ein elastisches Spannelement (5) einstückig mit mehr als zwei von einem Mittelknoten (7) ausgehenden Spannsträngen (6) ausgebildet ist.

2. Federkörper nach Patentanspruch 1, **dadurch gekennzeichnet, dass** vier Federarme (4) so zwischen der Grundplatte (2) und der Auflagetellerplatte (3) ausgebildet sind, dass sich jeweils zwei Federarme (4) parallel und diametral gegenüberstehen.

3. Federkörper nach Patentanspruch 2, **dadurch gekennzeichnet, dass** das Spannelement (5) einstückig, mit vier kreuzförmig an dem Mittelknoten (7) angeordneten Spannsträngen (6) ausgebildet ist.

4. Federkörper nach Patentanspruch 1, **dadurch gekennzeichnet, dass** drei Federarme in der Draufsicht jeweils in einem Winkel von 120° zueinander ausgebildet sind.

5. Federkörper nach Patentanspruch 4, **dadurch gekennzeichnet, dass** das Spannelement einstückig, mit drei an dem Mittelknoten angeordneten Spannsträngen ausgebildet ist.

6. Federkörper nach einem der Patentansprüche 1 bis 5, **dadurch gekennzeichnet, dass** das Spannelement (5) an jedem Spannstrang (6) mindestens zwei Einhängeverdickungen (12) aufweist.

7. Federkörper nach einem der Patentansprüche 1 bis 6, **dadurch gekennzeichnet, dass** der Federelement (1) aus Kunststoff besteht.

8. Federkörper nach einem der Patentansprüche 1 bis 7, **dadurch gekennzeichnet, dass** Spannelemente (5) in unterschiedlichen Elastizitätsgraden ausgebildet sind.
